# EUROPÄISCHE PATENTANMELDUNG

(11) **EP 4 607 782 A1**
(43) Veröffentlichungstag der Anmeldung: **27.08.2025**
(21) Anmeldenummer: 24159414.2
(22) Anmeldetag: 23.02.2024
(51) Int. Cl.: H02M 7/162, H02M 7/219, H02M 3/00, H02M 1/00

(54) **STROMVERSORGUNGSVORRICHTUNG UND VERFAHREN ZUM BETRIEB EINER STROMVERSORGUNGSVORRICHTUNG**

(71) Anmelder: Siemens Aktiengesellschaft, 80333 München (DE)
(72) Erfinder: Schulz, Stefan, 2152 Gnadendorf (AT); Hörist, Gerald, 1220 Wien (AT)
(74) Vertreter: Siemens Patent Attorneys

(57) **Zusammenfassung**

Die Erfindung betrifft eine Stromversorgungsvorrichtung (SW), insbesondere Schaltnetzteil, zum Erzeugen einer Versorgungsspannung an einem Ausgang der Stromversorgungsvorrichtung (SW) aus einer an einem Eingang der Stromversorgungsvorrichtung (SW) anliegenden dreiphasigen Wechselspannung (U_3PH), welche drei Phasen (L1, L2, L3) umfasst, umfassend:
- einen Leistungsteil (LT), umfassend:
- einen Gleichrichter (GR), der dazu ausgebildet ist, die Wechselspannung (U_3PH) in eine gleichgerichtete Eingangsspannung (U_IN) umzuwandeln; und
- eine erste Leistungsteilstufe (LTS1), die dazu ausgebildet ist, die gleichgerichtete Eingangsspannung (U_IN) in die Zwischenkreisspannung (U_ZK) umzuwandeln;

- und eine Regelungsschaltung (RS), die dazu ausgebildet ist, den Leistungsteil (LT) zu regeln, umfassend:
- einen ersten Regler (REG1), der dazu ausgebildet ist, aus einer ersten Regeldifferenz zwischen einer ersten Führungsgröße (FG1) und einer ersten Regelgröße (RG1) eine erste Stellgröße (SG1) zur Regelung des Leistungsteils (LT) zu ermitteln, wobei Reglerparameter des ersten Reglers (RFG1) veränderbar sind; und
- eine Phasenüberwachungseinheit (PÜE), die dazu ausgebildet ist, einen Ausfall einer Phase (L1, L2, L3) zu erkennen;

- wobei die Regelungsschaltung dazu ausgebildet ist, im Fall eines mittels der Phasenüberwachungseinheit (PÜE) erkannten Ausfalls einer Phase (L1, L2, L3), die Reglerparameter des ersten Reglers (REG1) zu verändern.

## Beschreibung

Die Erfindung betrifft eine Stromversorgungsvorrichtung und ein Verfahren zum Betrieb einer Stromversorgungsvorrichtung.

Eine Stromversorgungsvorrichtung, beispielsweise ein Schaltnetzteil, welches für den Einsatz an einem dreiphasigen Wechselspannungsnetz bzw. einem Drehstromnetz vorgesehen ist, soll auch beim Ausfall einer Phase weiterlaufen können, wobei eine möglichst hohe Ausgangsleistung bzw. möglichst Nennleistung zur Verfügung stehen soll, damit eine von der Stromversorgungsvorrichtung bzw. vom Schaltnetzteil versorgte Anlage nicht komplett zum Stillstand kommt. Dynamische Änderungen am Ausgang der Stromversorgungsvorrichtung bzw. des Schaltnetzteils, beispielsweise Lastsprünge, sollen dabei zu keinen Beeinträchtigungen der angeschlossenen Lasten führen.

Bisher führte der Wegfall einer Phase zu einer eingeschränkten Leistungsfähigkeit der Stromversorgungsvorrichtung bzw. des Schaltnetzteiles, d.h. es konnte bei einem Ausfall einer Phase vom Drehstromnetz nur eine reduzierte Leistung am Ausgang der Stromversorgungsvorrichtung entnommen werden. Aufgrund der beim Phasenausfall auftretenden hohen Ströme im Leistungsteil mussten Wickelgüter, insbesondere Induktivitäten, mit einer hohen Stromtragfähigkeit, speziell in Bezug auf das Sättigungsverhalten, eingesetzt werden.

Der Erfindung liegt die Aufgabe zugrunde, eine Stromversorgungsvorrichtung anzugeben, die eine hohe Verfügbarkeit, einen hohen Wirkungsgrad und eine hohe Dynamik aufweist, sowie die weiters hohen Oberwellenanforderungen entspricht, einen Schutz der enthaltenen Bauteile gewährleistet und kompakt und kostengünstig dimensioniert ist. Der Erfindung liegt außerdem die Aufgabe zugrunde, ein Verfahren zum Betrieb einer Stromversorgungsvorrichtung anzugeben, das für eine hohe Verfügbarkeit der Stromversorgungsvorrichtung sorgt, einen hohen Wirkungsgrad und eine hohe Dynamik der Stromversorgungsvorrichtung gewährleistet sowie dafür sorgt, dass die Stromversorgungsvorrichtung hohen Oberwellenanforderungen entspricht und weiters die Bauelemente der Stromversorgungsvorrichtung schützt und eine kostengünstige und kompakte Dimensionierung der Stromversorgungsvorrichtung ermöglicht.

Die Aufgabe wird gemäß dem unabhängigen Hauptanspruch 1 gelöst durch eine Stromversorgungsvorrichtung, insbesondere Schaltnetzteil, zum Umwandeln einer an einem Eingang der Stromversorgungsvorrichtung anliegenden dreiphasigen Wechselspannung, welche drei Phasen umfasst, umfassend:
- einen Leistungsteil umfassend:
   - einen Gleichrichter, der dazu ausgebildet ist, die Wechselspannung in eine gleichgerichtete Eingangsspannung umzuwandeln; und
   - eine erste Leistungsteilstufe, die dazu ausgebildet ist, die gleichgerichtete Eingangsspannung in eine Zwischenkreisspannung umzuwandeln;
- und eine Regelungsschaltung, die dazu ausgebildet ist, den Leistungsteil zu regeln, umfassend:
   - einen ersten Regler, der dazu ausgebildet ist, aus einer ersten Regeldifferenz zwischen einer ersten Führungsgröße und einer ersten Regelgröße eine erste Stellgröße zur Regelung des Leistungsteils zu ermitteln, wobei Reglerparameter des ersten Reglers veränderbar sind; und
   - eine Phasenüberwachungseinheit, die dazu ausgebildet ist, einen Ausfall einer Phase zu erkennen;
   - wobei die Regelungsschaltung dazu ausgebildet ist, im Fall eines mittels der Phasenüberwachungseinheit erkannten Ausfalls einer Phase, die Reglerparameter des ersten Reglers zu verändern.

Die Stromversorgungsvorrichtung kann insbesondere auch zum Erzeugen einer Versorgungsspannung an einem Ausgang der Stromversorgungsvorrichtung dienen, wobei die Stromversorgungsvorrichtung dazu ausgebildet sein kann, die Versorgungsspannung in Form einer Zwischenkreisspannung oder einer Ausgangsspannung zu erzeugen.

Die Versorgungsspannung stellt eine nutzbare Spannung dar, die an einem Ausgang der Stromversorgungsvorrichtung bereitgestellt wird. Wenn die Stromversorgungsvorrichtung ohne zweite Leistungsteilstufe ausgeführt ist, dann stellt die Zwischenkreisspannung die Versorgungsspannung dar. Somit kann durch diese Ausführungsvariante ein Spannungszwischenkreis versorgt werden. Wenn die Stromversorgungsvorrichtung mit einer zweiten Leistungsteilstufe ausgeführt wird, dann stellt die Ausgangsspannung der zweiten Leistungsteilstufe die Versorgungsspannung dar. Die Zwischenkreisspannung und die Ausgangsspannung sind bevorzugt jeweils Gleichspannungen.

Im Normalbetrieb, also im Drei-Phasen-Betrieb, kann vom Drehstromnetz eine konstante Leistung entnommen werden, wodurch eine Versorgungsspannung, bspw. eine Zwischenkreisspannung oder eine Ausgangsspannung, nahezu keine Welligkeit aufweist. Fällt jedoch eine der drei Phasen des Drehstromnetzes aus, d.h. es findet ein Zwei-Phasen-Betrieb statt, so kann keine konstante Leistung mehr aus dem Netz entnommen werden, wodurch eine höhere Spannungs-Welligkeit der Versorgungsspannung, bspw. der Zwischenkreisspannung oder der Ausgangsspannung, entsteht.

Aus diesem Grund werden die Reglerparamter des ersten Reglers, beispielsweise die Reglerparameter kp, ki und T1 eines Typ-II Reglers oder PIT1-Reglers, im Zwei-Phasen-Betrieb, also im Fall eines Ausfalls einer Phase des Drehstromnetzes, verändert bzw. umgeschaltet. Der erste Regler, beispielsweise ein Spannungsregler, wird hierbei langsamer gestellt. Damit wird erreicht, dass der erste Regler nicht versucht, die höhere Welligkeit der Versorgungsspannung, bspw. der Zwischenkreisspannung oder der Ausgangsspannung, auszuregeln.

Die erste Regelgröße kann dabei die Zwischenkreisspannung sein. Die erste Führungsgröße kann ein Sollwert der Zwischenkreisspannung sein. Die erste Stellgröße kann eine Stellgröße für den Leistungsteil sein, die bspw. den Einschaltzeiten, der Pulsbreite, oder der Periodendauer der elektrischen Schaltelemente, bspw. der Transistoren, im Leistungsteil entspricht, oder ein etwaiger Strom-Sollwert, der wiederum als Führungsgröße für einen etwaigen unterlagerten zweiten Regler dienen kann.

Vorteilhaft ist es, wenn die Regelungsschaltung dazu ausgebildet ist, die Reglerparameter derartig zu verändern, dass eine Reaktionsgeschwindigkeit des ersten Reglers auf Änderungen der ersten Regeldifferenz im Vergleich zu einem Drei-Phasen-Betrieb reduziert ist.

Diese Veränderung ist besonders vorteilhaft, da der erste Regler damit stabil bleibt und die Ströme im Leistungsteil nicht ansteigen. Dies kommt daher, dass der erste Regler damit in besonders vorteilhafter Weise nicht mehr versucht, die Welligkeit der Versorgungsspannung, bspw. der Zwischenkreisspannung oder der Ausgangsspannung, auszuregeln, da im Bereich der Nulldurchgänge der gleichgerichteten Eingangsspannung keine Energie aus dem nun 2-phasigen Wechselspannungsnetz entnommen werden kann. Durch die erfindungsmäßen Maßnahmen kann eine Induktivität mit möglichst kleinem Sättigungsstrom eingesetzt werden. Dies ist zur Erreichung einer möglichst kleinen Baugröße der Stromversorgungsvorrichtung besonders vorteilhaft.

Vorteilhaft ist es, wenn die Regelungsschaltung weiters einen zweiten Regler umfasst, der dazu ausgebildet ist, aus einer zweiten Regeldifferenz zwischen einer zweiten Führungsgröße und einer zweiten Regelgröße eine zweite Stellgröße zur Regelung des Leistungsteils zu ermitteln, wobei die Regelungsschaltung dazu ausgebildet ist, die zweite Regeldifferenz zu bilden und dabei die erste Stellgröße als zweite Führungsgröße zu nutzen, im Fall keines mittels der Phasenüberwachungseinheit erkannten Ausfalls einer Phase.

Diese Form der Regelung stellt eine kaskadierte Regelung dar und ermöglicht es der Stromversorgungsvorrichtung schneller auf Störungen wie beispielsweise Lastwechsel zu reagieren, da eine zweite Regelgröße berücksichtigt wird, die beispielsweise ein Strom im Leistungsteil sein kann. Die zweite Stellgröße kann eine Stellgröße für den Leistungsteil, insbesondere für die erste Leistungsteilstufe, sein, die bspw. den Einschaltzeiten, der Pulsbreite, oder der Periodendauer der elektrischen Schaltelemente, bspw. der Transistoren, im Leistungsteil, insbesondere in der ersten Leistungsteilstufe, entspricht.

Vorteilhaft ist es, wenn der Leistungsteil eine zweite Leistungsteilstufe umfasst, die dazu ausgebildet ist, die Zwischenkreisspannung in eine Ausgangsspannung umzuwandeln, und dass die Regelungsschaltung weiters eine Vorsteuereinheit umfasst, die dazu ausgebildet ist, eine Ausgangsleistung der zweiten Leistungsteilstufe und die Zwischenkreisspannung zu erfassen und daraus einen Vorsteuerwert zu bestimmen, wobei die Regelungsschaltung dazu ausgebildet ist,
- eine vorsteuerwertbehaftete erste Stellgröße als Summe aus der ersten Stellgröße und dem Vorsteuerwert zu bilden; und
- im Fall eines mittels der Phasenüberwachungseinheit erkannten Ausfalls einer Phase zur Bildung der zweiten Regeldifferenz die vorsteuerwertbehaftete erste Stellgröße als zweite Führungsgröße zu nutzen.

Die Vorsteuereinheit entspricht dabei einer Vorsteuerung im regelungstechnischen Sinn. Durch den Vorsteuerwert kann der zweite Regler, dessen Reglerparameter unverändert bleiben, die zweite Stellgröße schon anpassen und damit den geforderten Strom am Ausgang der ersten Leistungsteilstufe zur Verfügung stellen, bevor es überhaupt zu einer Abweichung der Zwischenkreisspannung vom durch die erste Führungsgröße vorgegebenen Wert, bspw. dem Sollwert der Zwischenkreisspannung, kommt.

Durch diese Merkmale ist eine sehr hohe Dynamik der ersten Leistungsteilstufe auch bei Ausfall einer Phase der dreiphasigen Wechselspannung sichergestellt, wodurch dynamische Änderungen am Ausgang der Stromversorgungsvorrichtung sehr schnell von der ersten Leistungsteilstufe ausgeregelt werden, und damit minimale Abweichungen der Zwischenkreisspannung von der vorgegebenen ersten Führungsgröße bzw. vom vorgegebenen Sollwert der Zwischenkreisspannung sichergestellt sind, die ohne spezielle Maßnahmen von der zweiten Leistungsteilstufe ausgeregelt werden können, sodass es zu keinen Beeinträchtigungen der am Ausgang angeschlossenen Lasten kommt. Hierdurch kann bei Ausfall einer Phase der dreiphasigen Wechselspannung weiterhin die volle Leistung am Ausgang der Stromversorgungsvorrichtung entnommen werden, wodurch eine hohe Verfügbarkeit der von der Stromversorgungsvorrichtung versorgten Last sichergestellt ist.

Vorteilhaft ist es, wenn die Regelungsschaltung weiters eine Leistungserfassungseinheit umfasst, die dazu ausgebildet ist,
- die Ausgangsspannung und einen Ausgangsstrom der zweiten Leistungsteilstufe zu erfassen;
- daraus die Ausgangsleistung zu bestimmen; und
- die Ausgangsleistung der Vorsteuereinheit bereitzustellen.

Durch diese Maßnahme wird eine besonders effiziente Bestimmung der Ausgangsleistung ermöglicht.

Vorteilhaft ist es, wenn die Regelungsschaltung weiters eine Modulationseinheit umfasst, die dazu ausgebildet ist,
- die gleichgerichtete Eingangsspannung zu erfassen; und
- die erste Stellgröße oder die etwaige vorsteuerwertbehaftete erste Stellgröße synchron zur gleichgerichteten Eingangsspannung zu modulieren und damit eine modulierte erste Stellgröße oder eine etwaige modulierte vorsteuerwertbehaftete erste Stellgröße zu bilden;
wobei die Regelungsschaltung dazu ausgebildet ist, im Fall eines mittels der Phasenüberwachungseinheit erkannten Ausfalls einer Phase zur Bildung der zweiten Regeldifferenz die modulierte erste Stellgröße oder die etwaige modulierte vorsteuerwertbehaftete erste Stellgröße als zweite Führungsgröße zu nutzen.

Durch diese Merkmale wird verhindert, dass im Phasenausfall zu hohe Spitzenströme in der ersten Leistungsteilstufe bzw. im DC/DC-Wandler auftreten, wodurch eine Induktivität mit möglichst kleinem Sättigungsstrom eingesetzt werden kann und Schäden an Bauteilen verhindert werden. Dies ist zur Erreichung einer möglichst kleinen Baugröße der Stromversorgungsvorrichtung essenziell. Außerdem können dadurch die Kosten reduziert werden. Zusätzlich wird durch die Modulation der ersten Stellgröße SG1 im Zwei-Phasen-Betrieb ein möglichst kleiner Effektivwert des Eingangsstromes erreicht, wodurch die Verluste in der ersten Leistungsteilstufe, im Gleichrichter und in einem etwaigen vorgeschalteten Filter minimiert werden. Außerdem kann durch die Modulation der ersten Stellgröße der quasiresonante Betrieb eines DC/DC-Wandlers, bei dem die elektronischen Schalter stets in einem Minimum der an ihnen anliegenden Spannung eingeschaltet werden, auch bei Phasenausfall sichergestellt werden, wodurch die Verluste auf ein Minimum beschränkt werden können. All diese Verlust minimierenden Maßnahmen führen dazu, dass auch beim Ausfall einer Phase eine möglichst hohe Leistung am Ausgang der Stromversorgungsvorrichtung zur Verfügung gestellt werden kann. Dies erhöht wiederum die Betriebssicherheit beim Einsatz der Stromversorgungsvorrichtung, da eine von der Stromversorgungsvorrichtung versorgte Anlage auch im Fehlerfall, d.h. bei einem Phasenausfall, nicht komplett zum Stillstand kommt.

Vorteilhaft ist es, wenn die Regelungsschaltung dazu ausgebildet ist, einen Mittelwert der gleichgerichteten Eingangsspannung zu bilden und der Modulationseinheit bereitzustellen, und dass die Modulationseinheit weiters dazu ausgebildet ist,
- einen von der Regelungsschaltung bereitgestellten Mittelwert der gleichgerichteten Eingangsspannung zu erfassen,
- einen Modulationsfaktor durch eine Division der gleichgerichteten Eingangsspannung durch den Mittelwert der gleichgerichteten Eingangsspannung zu bilden, und
- die erste Stellgröße oder die etwaige vorsteuerwertbehaftete erste Stellgröße durch eine Multiplikation mit dem Modulationsfaktor zu modulieren.

Durch diese Maßnahme wird eine besonders effiziente Modulation der ersten Stellgröße ermöglicht.

Die Aufgabe wird außerdem gemäß dem unabhängigen Hauptanspruch 8 gelöst durch ein Verfahren zum Betrieb einer Stromversorgungsvorrichtung. Weitere vorteilhafte Lösungen der Aufgabe ergeben sich aus den Unteransprüchen 9 bis 14.

Im Folgenden wird die Erfindung anhand der in den Figuren dargestellten Ausführungsbeispiele näher beschrieben und erläutert.

Es zeigen beispielhaft:
Fig. 1: Einen schematischen Aufbau einer beispielhaften ersten Ausführungsvariante einer erfindungsgemäßen Stromversorgungsvorrichtung,
Fig. 2: Einen schematischen Aufbau einer beispielhaften zweiten Ausführungsvariante einer erfindungsgemäßen Stromversorgungsvorrichtung,
Fig. 3: Einen schematischen Aufbau einer beispielhaften dritten Ausführungsvariante einer erfindungsgemäßen Stromversorgungsvorrichtung,
Fig. 4: Einen schematischen Aufbau einer beispielhaften vierten Ausführungsvariante einer erfindungsgemäßen Stromversorgungsvorrichtung,
Fig. 5: Einen beispielhaften zeitlichen Verlauf einer gleichgerichteten Eingangsspannung und eines Mittelwerts einer internen Spannung des Leistungsteils einer beispielhaften zweiten Ausführungsvariante einer erfindungsgemäßen Stromversorgungsvorrichtung, und
Fig. 6: Einen beispielhaften zeitlichen Verlauf einer ersten Stellgröße und eines Produkts aus einer ersten Stellgröße und eines Modulationsfaktors einer beispielhaften zweiten Ausführungsvariante einer erfindungsgemäßen Stromversorgungsvorrichtung.

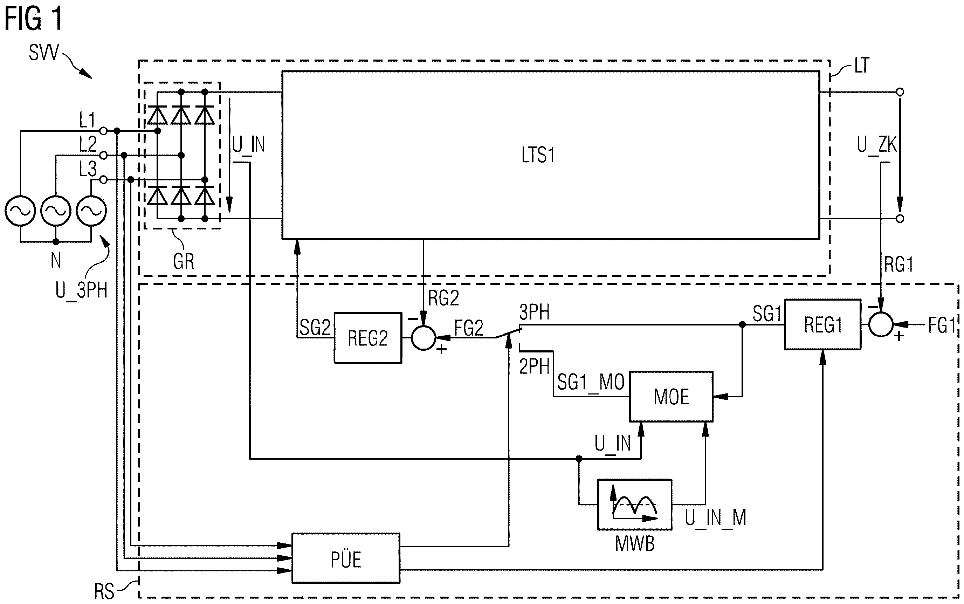

Fig. 1 zeigt einen schematischen Aufbau einer beispielhaften ersten Ausführungsvariante einer erfindungsgemäßen Stromversorgungsvorrichtung SW. Die Stromversorgungsvorrichtung SW umfasst einen Leistungsteil LT und eine Regelungsschaltung RS. Die Stromversorgungsvorrichtung SW wird an ihrem Eingang von einer dreiphasigen Wechselspannung U_3PH bzw. von einem Drehstromnetz mit den drei Phasen L1, L2 und L3 versorgt und erzeugt an einem Ausgang eine Versorgungsspannung, in diesem Ausführungsbeispiel eine Zwischenkreisspannung U_ZK.

Der Leistungsteil LT umfasst in diesem Ausführungsbeispiel einen Gleichrichter GR und eine erste Leistungsteilstufe LTS1. Der Gleichrichter GR ist in diesem Ausführungsbeispiel als B6-Gleichrichter ausgeführt. Der Gleichrichter GR wandelt die dreiphasige Wechselspannung U_3PH in eine gleichgerichtete Eingangsspannung U_IN um. Die gleichgerichtete Eingangsspannung U_IN liegt an einem Eingang der ersten Leistungsteilstufe LTS1 an. Die erste Leistungsteilstufe LTS1 wandelt die gleichgerichtete Eingangsspannung U_IN in eine Versorgungsspannung, in diesem Ausführungsbeispiel in eine Zwischenkreisspannung U_ZK, um. Wenn, wie in Fig. 1 dargestellt, keine zweite Leistungsteilstufe LTS2 vorgesehen ist, kann die Zwischenkreisspannung U_ZK jedoch als allgemeine Versorgungsspannung direkt zur Versorgung eines oder mehrerer nicht dargestellter Verbraucher angesehen und verwendet werden und ist nicht auf die weitere Nutzung in einem Spannungszwischenkreis eingeschränkt. Die erste Leistungsteilstufe LTS1 kann als DC-DC-Wandler, bspw. als Hoch-Tiefsetzsteller oder als Hochsetzsteller, ausgeführt sein.

Die Regelungsschaltung RS umfasst in diesem Ausführungsbeispiel einen ersten Regler REG1, einen zweiten Regler REG2, eine Phasenüberwachungseinheit PÜE, eine Modulationseinheit MOE und eine Mittelwertbildungseinheit MWB.

Der erste Regler REG1 und der zweite Regler REG2 können bspw. als Typ-II-Regler oder PIT1-Regler mit Reglerparametern wie bspw. kp, ki und T1 ausgeführt sein. Der erste Regler REG1 ist in diesem Ausführungsbeispiel als Spannungsregler ausgeführt. Der erste Regler REG1 ermittelt aus einer ersten Regeldifferenz, die von der Regelungsschaltung RS gebildet wird, zwischen einer ersten Führungsgröße FG1, die in diesem Ausführungsbeispiel ein Sollwert der Zwischenkreisspannung U_ZK ist, und einer ersten Regelgröße RG1, die in diesem Ausführungsbeispiel die Zwischenkreisspannung U_ZK ist, eine erste Stellgröße SG1, die in diesem Ausführungsbeispiel ein Sollwert eines Mittelwerts eines Stroms am Ausgang der ersten Leistungsteilstufe LTS1 ist. Die erste Regeldifferenz entspricht dabei der ersten Führungsgröße FG1 abzüglich der ersten Regelgröße RG1.

Die Phasenüberwachungseinheit PÜE ist dazu ausgebildet, die Phasen L1, L2 und L3 der dreiphasigen Wechselspannung U_3PH zu überwachen und einen Ausfall einer Phase L1, L2 oder L3 zu erkennen. Die Phasenüberwachung durch die Phasenüberwachungseinheit PÜE kann direkt durch Messung der drei Phasen-Spannungen der dreiphasigen Wechselspannung U_3PH am Eingang der Stromversorgungsvorrichtung SW bzw. des Leistungsteils LT erfolgen. Alternativ kann auch ein Signal innerhalb des Leistungsteils LT, der ersten Leistungsteilstufe LTS1 oder der zweiten Leistungsteilstufe LTS2 gemessen und bewertet werden, um einen Ausfall einer Phase L1, L2 oder L3 zu erkennen. Im Fall eines mittels der Phasenüberwachungseinheit PÜE erkannten Ausfalls einer Phase L1, L2 oder L3 der dreiphasigen Wechselspannung U_3PH, werden die Reglerparameter des ersten Reglers REG1 verändert. Die Reglerparameter des ersten Reglers REG1 können beispielsweise direkt von der Phasenüberwachungseinheit PÜE verändert werden oder die Phasenüberwachungseinheit PÜE kann durch ein Signal die Veränderung der Reglerparameter durch die Regelungsschaltung RS veranlassen. Die Reglerparameter des ersten Reglers REG1 werden dabei derart verändert, dass der erste Regler REG1 langsamer bzw. träger wird. Dies wird erreicht, indem die Werte der Reglerparameter verringert werden. Typische Reglerparameter bzw. Werte für Reglerparamter für den ersten Regler für den Drei-Phasen-Betrieb sind beispielsweise ein kp von 450, ein ki von 1,5 und ein T1 von 0,07 sowie für den Zwei-Phasen-Betrieb beispielsweise ein kp von 25, ein ki von 0,0075 und ein T1 von 0,005.

Der zweite Regler REG2 ist in diesem Ausführungsbeispiel als Stromregler ausgeführt. Der zweite Regler REG2 ermittelt aus einer zweiten Regeldifferenz, die von der Regelungsschaltung RS gebildet wird, zwischen einer zweiten Führungsgröße FG2, die in diesem Ausführungsbeispiel ein Sollwert eines Mittelwerts eines Stroms am Ausgang der ersten Leistungsteilstufe LTS1 ist, und einer zweiten Regelgröße RG2, die in diesem Ausführungsbeispiel ein Mittelwerts eines Stroms am Ausgang der ersten Leistungsteilstufe LTS1 ist, eine zweite Stellgröße SG2, die in diesem Ausführungsbeispiel bspw. den Einschaltzeiten, der Pulsbreite, oder der Periodendauer der elektrischen Schaltelemente, bspw. der Transistoren, im Leistungsteil, insbesondere in der ersten Leistungsteilstufe, entspricht. Die zweite Stellgröße SG2 wird anschließend zur Regelung bzw. zur Ansteuerung des Leistungsteils LT, insbesondere der ersten Leistungsteilstufte LTS1, verwendet. Die zweite Regeldifferenz entspricht dabei der zweiten Führungsgröße FG2 abzüglich der zweiten Regelgröße RG2. Der zweite Regler REG2 ist dem ersten Regler REG1 unterlagert. Der erste Regler REG1 und der zweite Regler REG2 sind dabei kaskadiert bzw. die Regelungsschaltung RS ist als Kaskadenregelung ausgeführt.

Die Regelungsschaltung RS ist dazu ausgebildet, die zweite Regeldifferenz zwischen der zweiten Führungsgröße FG2 und der zweiten Regelgröße RG2 zu bilden. Die Regelungsschaltung RS ist außerdem dazu ausgebildet, im Fall keines mittels der Phasenüberwachungseinheit PÜE erkannten Ausfalls einer Phase L1, L2, L3 (bzw. wenn mittels der Phasenüberwachungseinheit PÜE kein Ausfall einer Phase L1, L2 oder L3 erkannt wurde), zur Bildung der zweiten Regeldifferenz die erste Stellgröße SG1 als zweite Führungsgröße FG2 zu nutzen. In Fig. 1 ist dies schematisch durch einen Schalter mit der Schalterstellung 3PH dargestellt. Die Umschaltung innerhalb der Regelungsschaltung RS, schematisch dargestellt durch den Schalter, zwischen einem Zwei-Phasen-Betrieb bei Ausfall einer Phase L1, L2 oder L3 und einem Drei-Phasen-Betrieb, in dem alle Phasen L1, L2 und L3 zur Verfügung stehen, kann von der Phasenüberwachungseinheit PÜE beeinflusst werden. Die Phasenüberwachungseinheit PÜE überwacht den Zustand der Phasen L1, L2 und L3 dabei laufend.

Weiters ist in dieser Ausführungsvariante eine Modulationseinheit MOE vorgesehen. Die Modulationseinheit MOE ist dazu ausgebildet, die erste Stellgröße SG1 zu erfassen, sie synchron zur gleichgerichteten Eingangsspannung U_IN zu modulieren bzw. auf- und abzumodulieren und damit eine modulierte erste Stellgröße SG1_MO zu bilden. Die Modulationseinheit MOE ist dazu ausgebildet, die erste Stellgröße SG1 zu modulieren, indem sie sie mit einem Modulationsfaktor MOF multipliziert. Der Modulationsfaktor MOF ist dabei zeitabhängig und kann auch als Modulationssignal bezeichnet und angesehen werden. Die Modulationseinheit ist dazu ausgebildet, den Modulationsfaktor MOF durch eine Division der gleichgerichteten Eingangsspannung U_IN durch einen (zeitlichen) Mittelwert der gleichgerichteten Eingangsspannung U_IN_M zu bilden. Die Zeitabhängigkeit des Modulationsfaktors MOF ergibt sich daraus, dass auch die gleichgerichtete Eingangsspannung U_IN zeitabhängig ist. Der (zeitliche) Mittelwert der gleichgerichteten Eingangsspannung U_IN_M wird von der Regelungsschaltung RS gebildet, bspw. durch eine Mittelwertbildungseinheit MWB, und der Modulationseinheit MOE bereitgestellt.

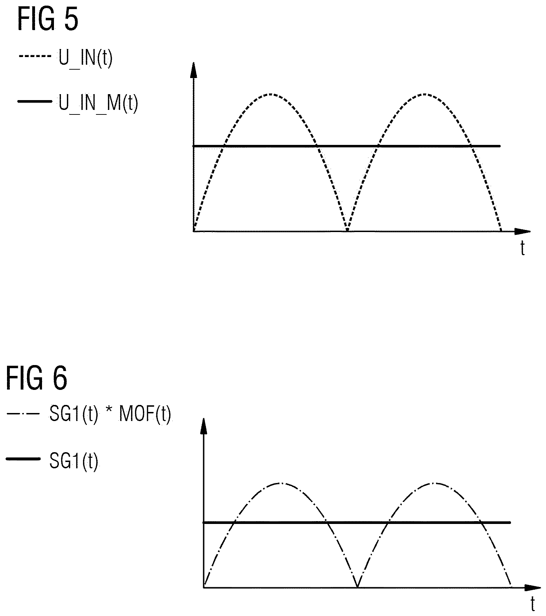

Der Zusammenhang ist in den Fig. 5 und 6 dargestellt. Fig. 5 zeigt den Zeitverlauf der gleichgerichteten Eingangsspannung U_IN und des (zeitlichen) Mittelwerts der gleichgerichteten Eingangsspannung U_IN_M im Fall eines Ausfalls einer der Phasen L1, L2 oder L3. Die gleichgerichtete Eingangsspannung U_IN pulsiert, wie in Fig. 5 dargestellt. Dies ergibt sich durch eine Überlagerung der beiden verbleibenden und um 120° phasenverschobenen Phasenspannungen der vormals dreiphasigen Wechselspannung U_3PH. Der (zeitliche) Mittelwert der gleichgerichteten Eingangsspannung U_IN_M ist während einer Periode der gleichgerichteten Eingangsspannung U_IN konstant. Fig. 6 zeigt den Zeitverlauf der ersten Stellgröße SG1 und das Ergebnis der Modulation durch die Multiplikation der erste Stellgröße SG1 mit dem Modulationsfaktor MOF, wobei das Ergebnis der modulierten ersten Stellgröße SG1_MO entspricht. Der Modulationsfaktor MOF wird wie oben beschrieben durch eine Division der gleichgerichteten Eingangsspannung U_IN durch den (zeitlichen) Mittelwert der gleichgerichteten Eingangsspannung U_IN_M gebildet.

Die Regelungsschaltung RS ist weiters, wie weiter in Fig. 1 dargestellt, dazu ausgebildet, für die Bildung der zweiten Regeldifferenz zwischen der zweiten Führungsgröße FG2 und der zweiten Regelgröße RG2, im Fall eines mittels der Phasenüberwachungseinheit PÜE erkannten Ausfalls einer Phase L1, L2, L3, die modulierte erste Stellgröße SG1_MO als zweite Führungsgröße FG2 zu nutzen. In Fig. 1 ist dies schematisch durch einen Schalter mit der Schalterstellung 2PH dargestellt. Durch die Nutzung der modulierten ersten Stellgröße SG1_MO als zweite Führungsgröße FG2 wird verhindert, dass der zweite Regler REG2 durch Anpassung der zweiten Stellgröße SG2 speziell im Bereich der Nullstellen bzw. Minima der gleichgerichteten Eingangsspannung U_IN, die bei Ausfall einer Phase L1, L2 oder L3 entstehen, versucht, den Strom zu liefern, der durch eine unmodulierte erste Stellgröße SG1 gefordert werden würde. Die Nutzung der modulierten ersten Stellgröße SG1_MO als zweite Führungsgröße FG2 führt damit zu reduzierten Strömen in der ersten Leistungsteilstufe LTS1, insbesondere zu reduzierten Spitzenwerten von Strömen in Drosseln, die in dieser Ausführungsvariante in der ersten Leistungsteilstufe LTS1 vorgesehen sind. Weiters werden damit Verluste in der ersten Leistungsteilstufe LTS1, im Gleichrichter GR und in einem etwaigen vorgeschalteten Filter reduziert und ein hoher Wirkungsgrad erreicht. Außerdem werden damit Oberwellenanforderungen an die Stromversorgungsvorrichtung SW eingehalten.

Die Regelungsschaltung RS ist weiters dazu ausgebildet, dass wenn wieder alle drei Phasen L1, L2 und L3 der dreiphasigen Wechselspannung U_3PH zur Verfügung stehen, also wenn von der Phasenüberwachungseinheit PÜE kein Ausfall einer Phase L1, L2 oder L3 mehr erkannt wird, die Reglerparameter des ersten Reglers REG1 wieder für den Drei-Phasen-Betrieb umzuschalten. Der erste Regler REG1 wird hierbei wieder schneller gestellt, da nun wieder eine konstante Leistung aus dem Drehstromnetz entnommen werden kann. Zusätzlich wird wieder die erste Stellgröße SG1 als zweite Führungsgröße FG2 zur Bildung der zweiten Regeldifferenz genutzt. Die Modulationseinheit MOE wird in diesem Fall durch die Regelungsschaltung RS deaktiviert oder weggeschalten.

In diesem Ausführungsbeispiel werden somit unter anderem die folgenden Verfahrensschritte ausgeführt, wenn von der Phasenüberwachungseinheit PÜE ein Ausfall einer Phase L1, L2 oder L3 erkannt wurde:
- Verändern der Reglerparameter des ersten Reglers REG1 durch die Regelungsschaltung RS, insbesondere derartig, dass eine Reaktionsgeschwindigkeit des ersten Reglers REG1 auf Änderungen der ersten Regeldifferenz im Vergleich zu einem Drei-Phasen-Betrieb reduziert wird ,
- Bilden der ersten Regeldifferenz zwischen der ersten Führungsgröße FG1 und der ersten Regelgröße RG1,
- Ermitteln einer ersten Stellgröße SG1 zur Regelung des Leistungsteils LT aus der ersten Regeldifferenz durch den ersten Regler REG1,
- Erfassen der gleichgerichteten Eingangsspannung U_IN durch die Modulationseinheit MOE,
- Bilden eines Mittelwerts der gleichgerichteten Eingangsspannung U_IN_M durch die Regelungsschaltung RS und Bereitstellen des Mittelwerts der gleichgerichteten Eingangsspannung U_IN_M für die Modulationseinheit MOE durch die Regelungsschaltung RS,
- Erfassen des Mittelwerts der gleichgerichteten Eingangsspannung U_IN_M durch die Modulationseinheit MOE,
- Bilden eines Modulationsfaktor MOF durch eine Division der gleichgerichteten Eingangsspannung U_IN durch den Mittelwert der gleichgerichteten Eingangsspannung U_IN_M durch die Modulationseinheit MOE,
- Modulieren der ersten Stellgröße SG1 synchron zur gleichgerichteten Eingangsspannung U_IN durch eine Multiplikation mit dem Modulationsfaktor MOF und damit Bilden der modulierten ersten Stellgröße SG1_MO,
- Bilden der zweiten Regeldifferenz zwischen der zweiten Führungsgröße FG2 und der zweiten Regelgröße RG2 durch die Regelungsschaltung RS, wobei zum Bilden der zweiten Regeldifferenz die modulierte erste Stellgröße SG1_MO als zweite Führungsgröße FG2 genutzt wird,
- Ermitteln der zweiten Stellgröße SG2 zur Regelung des Leistungsteils LT aus der zweiten Regeldifferenz durch den zweiten Regler REG2,
- Regeln des Leistungsteils LT, insbesondere der ersten Leistungsteilstufe LTS1, durch die zweite Stellgröße SG2.

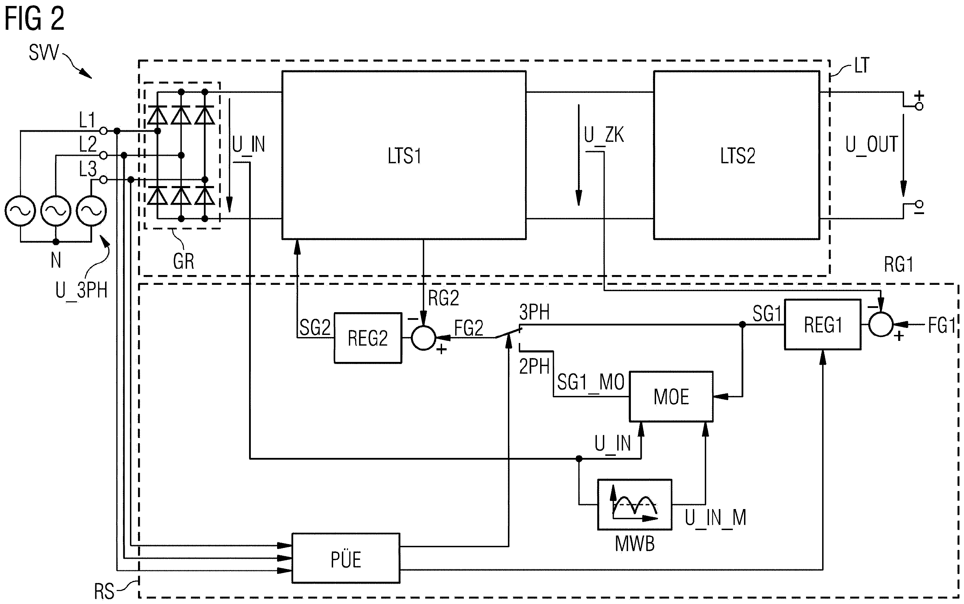

Fig. 2 zeigt einen schematischen Aufbau einer beispielhaften zweiten Ausführungsvariante einer erfindungsgemäßen Stromversorgungsvorrichtung SW. Der Unterschied zur in Fig. 1 dargestellten ersten Ausführungsvariante besteht darin, dass die Zwischenkreisspannung U_ZK an einem Eingang einer zweiten Leistungsteilstufe LTS2 anliegt. Die zweite Leistungsteilstufe LTS2 ist dazu ausgebildet, die Zwischenkreisspannung U_ZK in die Versorgungsspannung, in dieser Ausführungsvariante eine Ausgangsspannung U_OUT, umzuwandeln, welche an einem Ausgang der zweiten Leistungsteilstufe LTS2 bzw. einem Ausgang des Leistungsteils LT bereitgestellt wird. Die zweite Leistungsteilstufe LTS2 kann beispielsweise ein Wandler, insbesondere ein Resonanzwandler bzw. LLC-Resonanzwandler, sein.

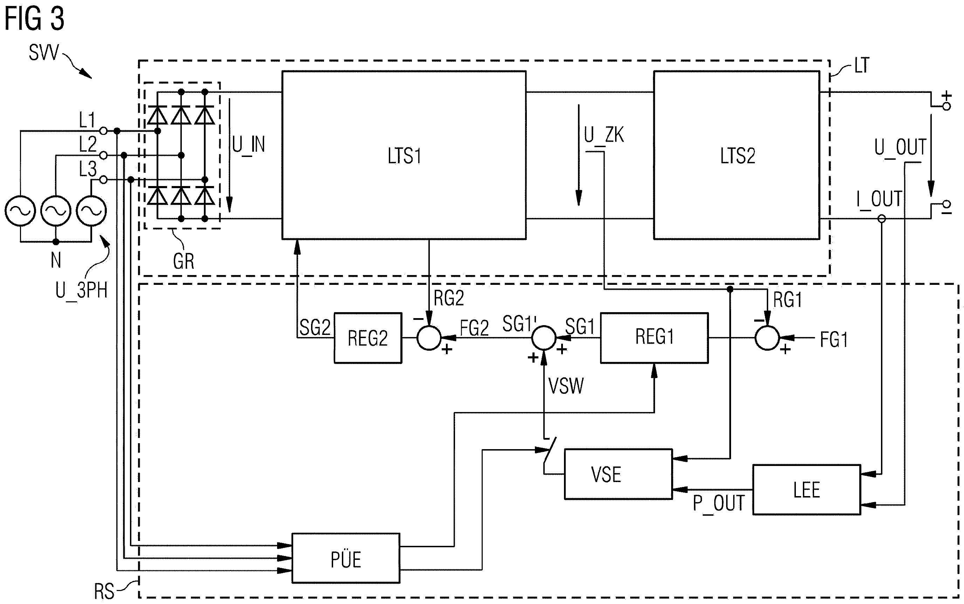

Fig. 3 zeigt einen schematischen Aufbau einer beispielhaften dritten Ausführungsvariante einer erfindungsgemäßen Stromversorgungsvorrichtung. Der Unterschied zur zweiten Ausführungsvariante besteht darin, dass die Regelungsschaltung RS unterschiedlich ausgebildet ist. Die Regelungsschaltung RS umfasst weiterhin den ersten Regler REG1, den zweiten Regler REG2 und die Phasenüberwachungseinheit PÜE. Die Phasenüberwachungseinheit PÜE ist weiterhin dazu ausgebildet, einen Ausfall einer Phase L1, L2 oder L3 der dreiphasigen Wechselspannung U_3PH zu erkennen. Der erste Regler REG1 ist weiterhin dazu ausgebildet, aus einer durch die Regelungsschaltung RS gebildeten ersten Regeldifferenz zwischen der ersten Führungsgröße FG1 und der ersten Regelgröße RG1 eine erste Stellgröße zu bilden. Auch in dieser Ausführungsvariante ist die erste Führungsgröße FG1 der Sollwert der Zwischenkreisspannung U_ZK und die erste Regelgröße RG1 die Zwischenkreisspannung U_ZK. Die Regelungsschaltung ist weiterhin dazu ausgebildet, im Fall eines mittels der Phasenüberwachungseinheit PÜE erkannten Ausfalls einer Phase L1, L2 oder L3 der dreiphasigen Wechselspannung U_3PH die Reglerparameter des ersten Reglers REG1 zu verändern. Der zweite Regler REG2 ist weiterhin dazu ausgebildet, aus einer durch die Regelungsschaltung RS gebildeten zweiten Regeldifferenz zwischen der zweiten Führungsgröße FG2 und der zweiten Regelgröße RG2 eine zweite Stellgröße zu bilden. Die Regelungsschaltung ist weiterhin dazu ausgebildet, zur Bildung der zweiten Regeldifferenz die ersten Stellgröße SG1 als zweite Führungsgröße FG2 zu nutzen, im Fall keines mittels der Phasenüberwachungseinheit PÜE erkannten Ausfalls einer Phase L1, L2 oder L3 der dreiphasigen Wechselspannung U_3PH. Der Unterschied zur zweiten Ausführungsvariante besteht nun darin, dass in dieser dritten Ausführungsvariante die Regelungsschaltung RS keine Modulationseinheit MOE und keine Mittelwertbildungseinheit MWB, sondern eine Vorsteuereinheit VSE und eine Leistungserfassungseinheit LEE umfasst. Die Vorsteuereinheit VSE ist dabei eine Vorsteuerung im regelungstechnischen Sinn. Die Vorsteuereinheit VSE ist dazu ausgebildet, eine Ausgangsleistung P_OUT der zweiten Leistungsteilstufe LTS2 und die Zwischenkreisspannung U_ZK zu erfassen und daraus einen Vorsteuerwert VSW zu bestimmen. Die Bestimmung des Vorsteuerwerts VSW erfolgt beispielsweise durch eine Division der Ausgangsleistung P_OUT durch die Zwischenkreisspannung U_ZK.Die Regelungsschaltung RS ist dazu ausgebildet eine vorsteuerwertbehaftete erste Stellgröße SG1' als Summe aus der ersten Stellgröße SG1 und dem Vorsteuerwert VSW zu bilden und im Fall eines mittels der Phasenüberwachungseinheit PÜE erkannten Ausfalls einer Phase L1, L2 oder L3 zur Bildung der zweiten Regeldifferenz die vorsteuerwertbehaftete erste Stellgröße SG1' als zweite Führungsgröße (FG2) zu nutzen. Dabei kann der Vorsteuerwert VSW von der Vorsteuereinheit VSE laufend gebildet werden und nur im Fall eines mittels der Phasenüberwachungseinheit PÜE erkannten Ausfalls einer Phase L1, L2 oder L3 zur Bildung der Summe zugeschaltet werden, wie in Fig. 3 durch einen von der Phasenüberwachungseinheit PÜE beeinflussten und schematisch dargestellten Schalter. Alternativ kann die Vorsteuereinheit VSE nur im Fall eines mittels der Phasenüberwachungseinheit PÜE erkannten Ausfalls einer Phase L1, L2 oder L3 aktiviert werden.

Beim Zuschalten oder Aktivieren der Vorsteuereinheit VSE wird der integrierende Anteil des ersten Reglers REG1, der in diesem Ausführungsbeispiel ein Spannungsregler ist, einmalig auf Null gesetzt, da der erste Regler REG1 bei aktiver Vorsteuereinheit VSE nur die Abweichungen der Vorsteuereinheit VSE ausregeln muss, die in der Regel sehr klein sind. Durch den Vorsteuerwert VSW kann der zweite Regler REG2, der in diesem Ausführungsbeispiel ein Stromregler ist, dessen Parameter unverändert bleiben, die zweite Stellgröße SG2 schon anpassen und den geforderten Strom am Ausgang der ersten Leistungsteilstufe LTS1 zur Verfügung stellen, bevor es überhaupt zu einer Abweichung der Zwischenkreisspannung U_ZK vom Sollwert der Zwischenkreisspannung kommt. Die erste Leistungsteilstufe LTS 1 weist durch diese Maßnahme eine hohe Dynamik auf.

Die Regelungsschaltung RS umfasst in diesem Ausführungsbeispiels weiters eine Leistungserfassungseinheit LEE, die dazu ausgebildet ist, die Ausgangsspannung U_OUT und einen Ausgangsstrom I_OUT der zweiten Leistungsteilstufe LTS2 zu erfassen, daraus die Ausgangsleistung P_OUT zu bestimmen und die Ausgangsleistung P_OUT der Vorsteuereinheit VSE bereitzustellen.

Die Regelungsschaltung RS ist weiters dazu ausgebildet, dass wenn wieder alle drei Phasen L1, L2 und L3 der dreiphasigen Wechselspannung U_3PH zur Verfügung stehen, also wenn von der Phasenüberwachungseinheit PÜE kein Ausfall einer Phase L1, L2 oder L3 mehr erkannt wird, die Reglerparameter des ersten Reglers REG1 wieder für den Drei-Phasen-Betrieb umzuschalten. Der erste Regler REG1 wird hierbei wieder schneller gestellt, da nun wieder eine konstante Leistung aus dem Drehstromnetz entnommen werden kann. Zusätzlich wird wieder die erste Stellgröße SG1 als zweite Führungsgröße FG2 zur Bildung der zweiten Regeldifferenz genutzt. Die Vorsteuereinheit VSE wird in diesem Fall durch die Regelungsschaltung RS deaktiviert oder weggeschalten.

In diesem Ausführungsbeispiel werden somit unter anderem die folgenden Verfahrensschritte ausgeführt, wenn von der Phasenüberwachungseinheit PÜE ein Ausfall einer Phase L1, L2 oder L3 erkannt wurde:
- Verändern der Reglerparameter des ersten Reglers REG1 durch die Regelungsschaltung RS, insbesondere derartig, dass eine Reaktionsgeschwindigkeit des ersten Reglers REG1 auf Änderungen der ersten Regeldifferenz im Vergleich zu einem Drei-Phasen-Betrieb reduziert wird ,
- Bilden der ersten Regeldifferenz zwischen der ersten Führungsgröße FG1 und der ersten Regelgröße RG1,
- Ermitteln der ersten Stellgröße SG1 zur Regelung des Leistungsteils LT aus der ersten Regeldifferenz durch den ersten Regler REG1,
- Erfassen der Ausgangsspannung U_OUT und des Ausgangsstroms I_OUT der zweiten Leistungsteilstufe LTS2 durch die Leistungserfassungseinheit LEE,
- Bestimmen der Ausgangsleistung P_OUT der zweiten Leistungsteilstufe LTS2 aus der Ausgangsspannung U_OUT und dem Ausgangsstrom I_OUT durch die Leistungserfassungseinheit LEE,
- Bereitstellen der Ausgangsleistung P_OUT für die Vorsteuereinheit VSE durch die Regelungsschaltung RS,
- Erfassen der Ausgangsleistung P_OUT und der Zwischenkreisspannung U_ZK durch die Vorsteuereinheit VSE,
- Bestimmen des Vorsteuerwerts VSW aus der Ausgangsleistung P_OUT und der Zwischenkreisspannung U_ZK, insbesondere durch eine Division der Ausgangsleistung P_OUT durch die Zwischenkreisspannung U_ZK, durch die Vorsteuereinheit VSE,
- Bilden der vorsteuerwertbehafteten ersten Stellgröße SG1' als Summe aus der ersten Stellgröße SG1 und dem Vorsteuerwert VSW durch die Regelungsschaltung RS,
- Bilden der zweiten Regeldifferenz zwischen der zweiten Führungsgröße FG2 und der zweiten Regelgröße RG2 durch die Regelungsschaltung RS, wobei zum Bilden der zweiten Regeldifferenz die vorsteuerwertbehaftete erste Stellgröße SG1' als zweite Führungsgröße FG2 genutzt wird,
- Ermitteln der zweiten Stellgröße SG2 zur Regelung des Leistungsteils LT aus der zweiten Regeldifferenz durch den zweiten Regler REG2,
- Regeln des Leistungsteils LT, insbesondere der ersten Leistungsteilstufe LTS1, durch die zweite Stellgröße SG2.

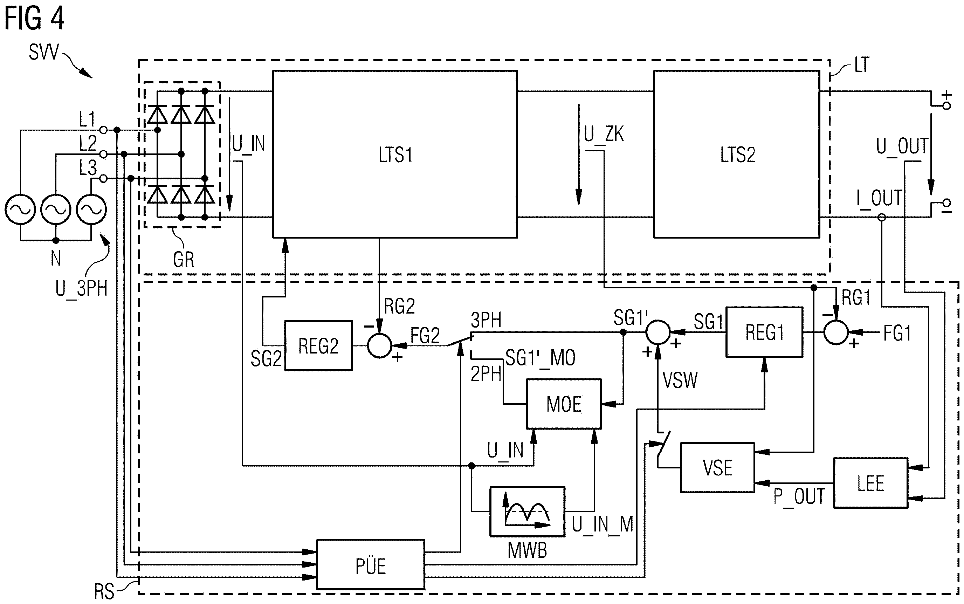

Fig. 4 zeigt einen schematischen Aufbau einer beispielhaften vierten Ausführungsvariante einer erfindungsgemäßen Stromversorgungsvorrichtung. Diese Ausführungsvariante stellt eine Kombination der zweiten und der dritten Ausführungsvariante dar, in der die Regelungsschaltung RS sowohl die Modulationseinheit MOE und die Mittelwertbildungseinheit als auch die Vorsteuereinheit VSE und die Leistungserfassungseinheit LEE umfasst. In dieser Ausführungsvariante werden damit die technischen Effekte und Vorteile der zweiten und dritten Ausführungsvariante miteinander in vorteilhafterweise vereint, sodass die Stromersorgungsvorrichtung SW in dieser Ausführungsvariante eine hohe Dynamik sowie geringe Verluste aufweist und hohen Anforderungen an die Oberwellencharakteristik genügt.

Die Regelungsschaltung RS ist dazu ausgebildet, im Fall, dass mittels der Phasenüberwachungseinheit PÜE ein Ausfall einer Phase L1, L2 oder L3 erkannt wird, sowohl die Modulationseinheit MOE als auch die Vorsteuereinheit VSE zu aktivieren oder zuzuschalten. Die durch den ersten Regler REG1 gebildete erste Stellgröße SG1 wird dabei zuerst mit einem durch die Vorsteuereinheit VSE gebildeten Vorsteuerwert VSW beaufschlagt. Aus dieser vorsteuerwertbehafteten ersten Stellgröße SG1' wird anschließend durch die Modulationseinheit MOE eine modulierte vorsteuerwertbehaftete erste Stellgröße SG1'_MO gebildet. Die Regelungsschaltung RS ist dazu ausgebildet, die modulierte vorsteuerwertbehaftete erste Stellgröße SG1'_MO zur Bildung der zweiten Regeldifferenz als zweite Führungsgröße FG2 zu nutzen.

In diesem Ausführungsbeispiel werden somit unter anderem die folgenden Verfahrensschritte ausgeführt, wenn von der Phasenüberwachungseinheit PÜE ein Ausfall einer Phase L1, L2 oder L3 erkannt wurde:
- Verändern der Reglerparameter des ersten Reglers REG1 durch die Regelungsschaltung RS, insbesondere derartig, dass eine Reaktionsgeschwindigkeit des ersten Reglers REG1 auf Änderungen der ersten Regeldifferenz im Vergleich zu einem Drei-Phasen-Betrieb reduziert wird ,
- Bilden der ersten Regeldifferenz zwischen der ersten Führungsgröße FG1 und der ersten Regelgröße RG1,
- Ermitteln der ersten Stellgröße SG1 zur Regelung des Leistungsteils LT aus der ersten Regeldifferenz durch den ersten Regler REG1,
- Erfassen der Ausgangsspannung U_OUT und des Ausgangsstroms I_OUT der zweiten Leistungsteilstufe LTS2 durch die Leistungserfassungseinheit LEE,
- Bestimmen der Ausgangsleistung P_OUT der zweiten Leistungsteilstufe LTS2 aus der Ausgangsspannung U_OUT und dem Ausgangsstrom I_OUT durch die Leistungserfassungseinheit LEE,
- Bereitstellen der Ausgangsleistung P_OUT für die Vorsteuereinheit VSE durch die Regelungsschaltung RS,
- Erfassen der Ausgangsleistung P_OUT und der Zwischenkreisspannung U_ZK durch die Vorsteuereinheit VSE,
- Bestimmen des Vorsteuerwerts VSW aus der Ausgangsleistung P_OUT und der Zwischenkreisspannung U_ZK, insbesondere durch eine Division der Ausgangsleistung P_OUT durch die Zwischenkreisspannung U_ZK, durch die Vorsteuereinheit VSE,
- Bilden der vorsteuerwertbehafteten ersten Stellgröße SG1' als Summe aus der ersten Stellgröße SG1 und dem Vorsteuerwert VSW durch die Regelungsschaltung RS,
- Erfassen der gleichgerichteten Eingangsspannung U_IN durch die Modulationseinheit MOE,
- Bilden eines Mittelwerts der gleichgerichteten Eingangsspannung U_IN_M durch die Regelungsschaltung RS und Bereitstellen des Mittelwerts der gleichgerichteten Eingangsspannung U_IN_M für die Modulationseinheit MOE durch die Regelungsschaltung RS,
- Erfassen des Mittelwerts der gleichgerichteten Eingangsspannung U_IN_M durch die Modulationseinheit MOE,
- Bilden eines Modulationsfaktor MOF durch eine Division der gleichgerichteten Eingangsspannung U_IN durch den Mittelwert der gleichgerichteten Eingangsspannung U_IN_M durch die Modulationseinheit MOE,
- Modulieren der vorsteuerwertbehafteten ersten Stellgröße SG1' synchron zur gleichgerichteten Eingangsspannung U_IN durch eine Multiplikation mit dem Modulationsfaktor MOF und damit Bilden der modulierten vorsteuerwertbehafteten ersten Stellgröße SG1' _MO,
- Bilden der zweiten Regeldifferenz zwischen der zweiten Führungsgröße FG2 und der zweiten Regelgröße RG2 durch die Regelungsschaltung RS, wobei zum Bilden der zweiten Regeldifferenz die vorsteuerwertbehaftete modulierte erste Stellgröße SG1'_MO als zweite Führungsgröße FG2 genutzt wird,
- Ermitteln der zweiten Stellgröße SG2 zur Regelung des Leistungsteils LT aus der zweiten Regeldifferenz durch den zweiten Regler REG2,
- Regeln des Leistungsteils LT, insbesondere der ersten Leistungsteilstufe LTS1, durch die zweite Stellgröße SG2.

In allen Ausführungsvarianten werden die Werte, Größen, Faktoren oder Signale, wie beispielsweise die erste Regeldifferenz, die zweite Regeldifferenz, die erste Stellgröße SG1, die zweite Stellgröße SG2, der Vorsteuerwert VSW, der Modulationsfaktor MOF oder der Mittelwert der gleichgerichteten Eingangsspannung U_IN_M, kontinuierlich oder in diskreten Zeitabständen bestimmt, ermittelt bzw. gebildet und damit eine ständige Regelung des Leistungsteils LT durch die Regelungsschaltung RS durchgeführt.

Es ist erfindungsgemäß auch möglich, keine kaskadierte Regelung mit einem ersten Regler REG1 und einem zweiten Regler REG2 auszuführen, sondern lediglich einen ersten Regler REG1 einzusetzen. Die erste Stellgröße SG1 entspricht dann den Einschaltzeiten, der Pulsbreite, oder der Periodendauer der elektrischen Schaltelemente, beispielsweise der Transistoren, im Leistungsteil LT bzw. in der erste Leistungsteilstufe LTS1.

## Patentansprüche

1. Stromversorgungsvorrichtung (SW), insbesondere Schaltnetzteil, zum Umwandeln einer an einem Eingang der Stromversorgungsvorrichtung (SW) anliegenden dreiphasigen Wechselspannung (U_3PH), welche drei Phasen (L1, L2, L3) umfasst, umfassend:
- einen Leistungsteil (LT), umfassend:
- einen Gleichrichter (GR), der dazu ausgebildet ist, die Wechselspannung (U_3PH) in eine gleichgerichtete Eingangsspannung (U_IN) umzuwandeln; und
- eine erste Leistungsteilstufe (LTS1), die dazu ausgebildet ist, die gleichgerichtete Eingangsspannung (U_IN) in eine Zwischenkreisspannung (U_ZK) umzuwandeln;
- und eine Regelungsschaltung (RS), die dazu ausgebildet ist, den Leistungsteil (LT) zu regeln, umfassend:
- einen ersten Regler (REG1), der dazu ausgebildet ist, aus einer ersten Regeldifferenz zwischen einer ersten Führungsgröße (FG1) und einer ersten Regelgröße (RG1) eine erste Stellgröße (SG1) zur Regelung des Leistungsteils (LT) zu ermitteln, wobei Reglerparameter des ersten Reglers (REG1) veränderbar sind; und
- eine Phasenüberwachungseinheit (PÜE), die dazu ausgebildet ist, einen Ausfall einer Phase (L1, L2, L3) zu erkennen;
- wobei die Regelungsschaltung (RS) dazu ausgebildet ist, im Fall eines mittels der Phasenüberwachungseinheit (PÜE) erkannten Ausfalls einer Phase (L1, L2, L3), die Reglerparameter des ersten Reglers (REG1) zu verändern.

2. Vorrichtung nach Anspruch 1, **dadurch gekennzeichnet, dass** die Regelungsschaltung (RS) dazu ausgebildet ist, die Reglerparameter derartig zu verändern, dass eine Reaktionsgeschwindigkeit des ersten Reglers (REG1) auf Änderungen der ersten Regeldifferenz im Vergleich zu einem Drei-Phasen-Betrieb reduziert ist.

3. Vorrichtung nach einem der Ansprüche 1 oder 2, **dadurch gekennzeichnet, dass** die Regelungsschaltung (RS) weiters einen zweiten Regler (REG2) umfasst, der dazu ausgebildet ist, aus einer zweiten Regeldifferenz zwischen einer zweiten Führungsgröße (FG2) und einer zweiten Regelgröße (RG2) eine zweite Stellgröße (SG2) zur Regelung des Leistungsteils (LT) zu ermitteln, wobei die Regelungsschaltung (RS) dazu ausgebildet ist, die zweite Regeldifferenz zu bilden und dabei die erste Stellgröße (SG1) als zweite Führungsgröße (FG2) zu nutzen, im Fall keines mittels der Phasenüberwachungseinheit (PÜE) erkannten Ausfalls einer Phase (L1, L2, L3).

4. Vorrichtung nach Anspruch 3, **dadurch gekennzeichnet, dass** der Leistungsteil (LT) eine zweite Leistungsteilstufe (LTS2) umfasst, die dazu ausgebildet ist, die Zwischenkreisspannung (U_ZK) in eine Ausgangsspannung (U_OUT) umzuwandeln, und dass die Regelungsschaltung (RS) weiters eine Vorsteuereinheit (VSE) umfasst, die dazu ausgebildet ist, eine Ausgangsleistung (P_OUT) der zweiten Leistungsteilstufe (LTS2) und die Zwischenkreisspannung (U_ZK) zu erfassen und daraus einen Vorsteuerwert (VSW) zu bestimmen, wobei die Regelungsschaltung (RS) dazu ausgebildet ist,
- eine vorsteuerwertbehaftete erste Stellgröße (SG1') als Summe aus der ersten Stellgröße (SG1) und dem Vorsteuerwert (VSW) zu bilden; und
- im Fall eines mittels der Phasenüberwachungseinheit (PÜE) erkannten Ausfalls einer Phase (L1, L2, L3) zur Bildung der zweiten Regeldifferenz die vorsteuerwertbehaftete erste Stellgröße (SG1') als zweite Führungsgröße (FG2) zu nutzen.

5. Vorrichtung nach Anspruch 4, **dadurch gekennzeichnet, dass** die Regelungsschaltung (RS) weiters eine Leistungserfassungseinheit (LEE) umfasst, die dazu ausgebildet ist,
- die Ausgangsspannung (U_OUT) und einen Ausgangsstrom (I_OUT) der zweiten Leistungsteilstufe (LTS2) zu erfassen;
- daraus die Ausgangsleistung (P_OUT) zu bestimmen; und
- die Ausgangsleistung (P_OUT) der Vorsteuereinheit (VSE) bereitzustellen.

6. Vorrichtung nach einem der Ansprüche 3 bis 5, **dadurch gekennzeichnet, dass** die Regelungsschaltung (RS) weiters eine Modulationseinheit (MOE) umfasst, die dazu ausgebildet ist,
- die gleichgerichtete Eingangsspannung (U_IN) zu erfassen; und
- die erste Stellgröße (SG1) oder die etwaige vorsteuerwertbehaftete erste Stellgröße (SG1') synchron zur gleichgerichteten Eingangsspannung (U_IN) zu modulieren und damit eine modulierte erste Stellgröße (SG1_MO) oder eine etwaige modulierte vorsteuerwertbehaftete erste Stellgröße (SG1'_MO) zu bilden;
wobei die Regelungsschaltung (RS) dazu ausgebildet ist, im Fall eines mittels der Phasenüberwachungseinheit (PÜE) erkannten Ausfalls einer Phase (L1, L2, L3) zur Bildung der zweiten Regeldifferenz die modulierte erste Stellgröße (SG1_MO) oder die etwaige modulierte vorsteuerwertbehaftete erste Stellgröße (SG1'_MO) als zweite Führungsgröße (FG2) zu nutzen.

7. Vorrichtung nach Anspruch 6, **dadurch gekennzeichnet, dass** die Regelungsschaltung (RS) dazu ausgebildet ist, einen Mittelwert der gleichgerichteten Eingangsspannung (U_IN_M) zu bilden und der Modulationseinheit (MOE) bereitzustellen, und dass die Modulationseinheit (MOE) weiters dazu ausgebildet ist,
- einen von der Regelungsschaltung (RS) bereitgestellten Mittelwert der gleichgerichteten Eingangsspannung (U_IN_M) zu erfassen,
- einen Modulationsfaktor (MOF) durch eine Division der gleichgerichteten Eingangsspannung (U_IN) durch den Mittelwert der gleichgerichteten Eingangsspannung (U_IN_M) zu bilden, und
- die erste Stellgröße (SG1) oder die etwaige vorsteuerwertbehaftete erste Stellgröße (SG1') durch eine Multiplikation mit dem Modulationsfaktor (MOF) zu modulieren.

8. Verfahren zum Betrieb einer Stromversorgungsvorrichtung (SW) nach einem der Ansprüche 1 bis 7, insbesondere eines Schaltnetzteil, zum Umwandeln einer an einem Eingang der Stromversorgungsvorrichtung (SW) anliegenden dreiphasigen Wechselspannung (U_3PH), welche drei Phasen (L1, L2, L3) umfasst, umfassend:
- einen Leistungsteil (LT), umfassend:
- einen Gleichrichter (GR), der die Wechselspannung (U_3PH) in eine gleichgerichtete Eingangsspannung (U_IN) umwandelt; und
- eine erste Leistungsteilstufe (LTS1), die die gleichgerichtete Eingangsspannung (U_IN) in die Zwischenkreisspannung (U_ZK) umwandelt;
- und eine Regelungsschaltung (RS), die den Leistungsteil (LT) regelt, umfassend:
- einen ersten Regler (REG1), wobei Reglerparameter des ersten Reglers (REG1) veränderbar sind; und
- eine Phasenüberwachungseinheit (PÜE);
wobei die folgenden weiteren Verfahrensschritte ausgeführt werden:
- Verändern der Reglerparameter des ersten Reglers (REG1) durch die Regelungsschaltung (RS), wenn durch die Phasenüberwachungseinheit (PÜE) ein Ausfall einer Phase (L1, L2, L3) erkannt wurde;
- Ermitteln einer ersten Stellgröße (SG1) zur Regelung des Leistungsteils (LT) aus einer ersten Regeldifferenz zwischen einer ersten Führungsgröße (FG1) und einer ersten Regelgröße (RG1) durch den ersten Regler (REG1).

9. Verfahren nach Anspruch 8, **dadurch gekennzeichnet, dass** die Regelungsschaltung (RS) die Reglerparameter derartigt verändert, dass eine Reaktionsgeschwindigkeit des ersten Reglers (REG1) auf Änderungen der ersten Regeldifferenz im Vergleich zu einem Drei-Phasen-Betrieb reduziert wird.

10. Verfahren nach einem der Ansprüche 8 oder 9, **dadurch gekennzeichnet, dass** die Regelungsschaltung (RS) weiters einen zweiten Regler (REG2) umfasst; wobei die folgenden weiteren Verfahrensschritte ausgeführt werden:
- Bilden einer zweiten Regeldifferenz zwischen einer zweiten Führungsgröße (FG2) und einer zweiten Regelgröße (RG2) durch die Regelungsschaltung (RS), wobei zum Bilden der zweiten Regeldifferenz die erste Stellgröße (SG1) als zweite Führungsgröße (FG2) genutzt wird, wenn mittels der Phasenüberwachungseinheit (PÜE) kein Ausfall einer Phase (L1, L2, L3) erkannt wurde;
- Ermitteln einer zweiten Stellgröße (SG2) zur Regelung des Leistungsteils (LT) aus der zweiten Regeldifferenz durch den zweiten Regler (REG2).

11. Verfahren nach Anspruch 10, **dadurch gekennzeichnet, dass** der Leistungsteil (LT) weiters eine zweite Leistungsteilstufe (LTS2) umfasst, die die Zwischenkreisspannung (U_ZK) in eine Ausgangsspannung (U_OUT) umwandelt, und die Regelungsschaltung (RS) weiters eine Vorsteuereinheit (VSE) umfasst; wobei die folgenden weiteren Verfahrensschritte ausgeführt werden:
- Erfassen einer Ausgangsleistung (P_OUT) der zweiten Leistungsteilstufe (LTS2) und der Zwischenkreisspannung (U_ZK) durch die Vorsteuereinheit (VSE);
- Bestimmen eines Vorsteuerwert (VSW) aus der Ausgangsleistung (P_OUT) und der Zwischenkreisspannung (U_ZK) durch die Vorsteuereinheit (VSE);
- Bilden einer vorsteuerwertbehafteten ersten Stellgröße (SG1') als Summe aus der ersten Stellgröße (SG1) und dem Vorsteuerwert (VSW) durch die Regelungsschaltung (RS);
- Bilden der zweiten Regeldifferenz zwischen der zweiten Führungsgröße (FG2) und der zweiten Regelgröße (RG2) durch die Regelungsschaltung (RS), wobei zum Bilden der zweiten Regeldifferenz die vorsteuerwertbehaftete erste Stellgröße (SG1') als zweite Führungsgröße (FG2) genutzt wird, wenn mittels der Phasenüberwachungseinheit (PÜE) ein Ausfall einer Phase (L1, L2, L3) erkannt wurde; und
- Ermitteln einer zweiten Stellgröße (SG2) zur Regelung des Leistungsteils (LT) aus der zweiten Regeldifferenz durch den zweiten Regler (REG2).

12. Verfahren nach Anspruch 11, **dadurch gekennzeichnet, dass** die Regelungsschaltung (RS) weiters eine Leistungserfassungseinheit (LEE) umfasst; wobei die folgenden weiteren Verfahrensschritte ausgeführt werden:
- Erfassen der Ausgangsspannung (U_OUT) und eines Ausgangsstroms (I_OUT) der zweiten Leistungsteilstufe (LTS2) durch die Leistungserfassungseinheit (LEE);
- Bestimmen der Ausgangsleistung (P_OUT) der zweiten Leistungsteilstufe (LTS2) aus der Ausgangsspannung (U_OUT) und dem Ausgangsstrom (I_OUT) durch die Leistungserfassungseinheit (LEE); und
- Bereitstellen der Ausgangsleistung (P_OUT) für die Vorsteuereinheit (VSE) durch die Regelungsschaltung (RS) .

13. Verfahren nach einem der Ansprüche 10 bis 12, **dadurch gekennzeichnet, dass** die Regelungsschaltung (RS) weiters eine Modulationseinheit (MOE) umfasst, wobei die folgenden weiteren Verfahrensschritte ausgeführt werden:
- Erfassen der gleichgerichteten Eingangsspannung (U_IN) durch die Modulationseinheit (MOE);
- Modulieren der ersten Stellgröße (SG1) oder der etwaigen vorsteuerwertbehafteten erste Stellgröße (SG1') synchron zur gleichgerichteten Eingangsspannung (U_IN) und damit Bilden einer modulierten ersten Stellgröße (SG1_MO) oder einer etwaigen modulierten vorsteuerwertbehafteten ersten Stellgröße (SG1'_MO);
- Bilden der zweiten Regeldifferenz zwischen der zweiten Führungsgröße (FG2) und der zweiten Regelgröße (RG2) durch die Regelungsschaltung (RS), wobei zum Bilden der zweiten Regeldifferenz die modulierte erste Stellgröße (SG1_MO) oder die etwaige modulierte vorsteuerwertbehaftete erste Stellgröße (SG1'_MO) als zweite Führungsgröße (FG2) genutzt wird, wenn mittels der Phasenüberwachungseinheit (PÜE) ein Ausfall einer Phase (L1, L2, L3) erkannt wurde; und
- Ermitteln einer zweiten Stellgröße (SG2) zur Regelung des Leistungsteils (LT) aus der zweiten Regeldifferenz durch den zweiten Regler (REG2).

14. Verfahren nach Anspruch 13, **dadurch gekennzeichnet, dass** die folgenden weiteren Verfahrensschritte ausgeführt werden:
- Bilden eines Mittelwerts der gleichgerichteten Eingangsspannung (U_IN_M) durch die Regelungsschaltung (RS) und Bereitstellen des Mittelwerts der gleichgerichteten Eingangsspannung (U_IN_M) für die Modulationseinheit (MOE) durch die Regelungsschaltung (RS),
- Erfassen des Mittelwerts der gleichgerichteten Eingangsspannung (U_IN_M) durch die Modulationseinheit (MOE),
- Bilden eines Modulationsfaktor (MOF) durch eine Division der gleichgerichteten Eingangsspannung (U_IN) durch den Mittelwert der gleichgerichteten Eingangsspannung (U_IN_M) durch die Modulationseinheit (MOE),
- Modulieren der ersten Stellgröße (SG1) oder der etwaigen vorsteuerwertbehafteten ersten Stellgröße (SG1') durch eine Multiplikation mit dem Modulationsfaktor (MOF) durch die Modulationseinheit (MOE).
